# FASCICULE DE BREVET EUROPEEN

(11) **EP 3 230 083 B1**
(45) Date de publication et mention de la délivrance du brevet: **06.02.2019**
(21) Numéro de dépôt: 15804445.3
(22) Date de dépôt: 02.12.2015
(51) Int. Cl.: B60C 9/26, B60C 9/18

(54) **ARMATURE DE SOMMET DE PROTECTION DE PNEUMATIQUE POUR AVION**
SCHÜTZENDE DECKENVERSTÄRKUNG FÜR EINEN FLUGZEUGREIFEN
PROTECTIVE CROWN REINFORCEMENT FOR AEROPLANE TYRE

(30) Priorité: 08.12.2014 FR 1462030
(43) Date de publication de la demande: 18.10.2017
(73) Titulaire: Compagnie Générale des Etablissements Michelin, 63000 Clermont-Ferrand (FR)
(72) Inventeur: KIEBRE, Rimyalegdo, 63040 Clermont-Ferrand Cedex 9 (FR); FRANCOIS, Olivier, 63040 Clermont-Ferrand Cedex 9 (FR)
(74) Mandataire: Millanvois, Patrick Jacques Jean
(86) Numéro de dépôt international: PCT/EP2015/078362
(87) Numéro de publication internationale: WO 2016/091683

(56) Documents cités:
- EP-A1- 0 540 303
- WO-A1-88/03481
- FR-A1- 2 984 231
- FR-A2- 2 518 462
- US-A1- 2006 278 321
- US-E- R E28 155

## Description

La présente invention concerne un pneumatique pour avion, et, en particulier, l'armature de protection d'un pneumatique pour avion.

Des pneumatiques pour avions sont divulgués dans les documents FR-A-2518462, FR-A-2984231 et EP-A-0540303.

De façon générale, un pneumatique ayant une géométrie de révolution par rapport à un axe de rotation, la géométrie du pneumatique est usuellement décrite dans un plan méridien ou radial contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement », « axialement » et « circonférentiellement » signifient respectivement « selon la direction radiale », « selon la direction axiale » et « selon la direction circonférentielle » du pneumatique. Les expressions « radialement intérieur, respectivement radialement extérieur» signifient « plus proche, respectivement plus éloigné, de l'axe de rotation du pneumatique, selon la direction radiale, que ». Les expressions « axialement intérieur, respectivement axialement extérieur» signifient « plus proche, respectivement plus éloigné, du plan équatorial du pneumatique, selon la direction axiale, que », le plan équatorial du pneumatique étant le plan perpendiculaire à l'axe de rotation du pneumatique passant par le milieu de la bande de roulement du pneumatique.

L'armature de protection d'un pneumatique est une structure cylindrique ayant pour axe de révolution l'axe de rotation du pneumatique. L'armature de protection s'étend axialement depuis une première extrémité axiale jusqu'à une deuxième extrémité axiale sur une largeur axiale L et s'étend radialement depuis une première face radialement intérieure jusqu'à une deuxième face radialement extérieure sur une épaisseur radiale moyenne T. Selon la direction radiale, l'armature de protection est un empilage d'au moins une couche de protection, constituée d'éléments de renforcement ou renforts métalliques ou textiles. Les renforts sont enrobés dans un mélange élastomérique, c'est-à-dire un matériau à base de caoutchouc naturel ou synthétique obtenu par mélangeage de divers constituants. Lorsque l'armature de protection est constituée par un empilage d'au moins deux couches de protection, la largeur axiale L de l'armature de protection est la largeur axiale de la couche de protection ayant la plus grande largeur axiale, et l'épaisseur radiale moyenne T de l'armature de protection est la somme des épaisseurs radiales moyennes des couches de protection. L'armature de protection est radialement intérieure à une bande de roulement et radialement extérieure à une armature de travail. L'armature de protection protège essentiellement l'armature de travail des agressions susceptibles de se propager à travers la bande de roulement radialement vers l'intérieur du pneumatique.

La bande de roulement est la partie du pneumatique, destinée à entrer en contact avec un sol par l'intermédiaire d'une surface de roulement radialement extérieure: c'est la partie usante du pneumatique. Dans le cas d'un pneumatique pour avion, la bande de roulement, comprenant au moins un mélange élastomérique, est le plus souvent constituée par des nervures circonférentielles séparées par des creux circonférentiels, appelés sillons circonférentiels.

L'armature de travail, radialement intérieure à l'armature de protection, est également une structure cylindrique ayant pour axe de révolution l'axe de rotation du pneumatique. Selon la direction radiale, l'armature de travail est un empilage d'au moins deux couches de travail, constituées le plus souvent de renforts textiles enrobés dans un mélange élastomérique. Dans un pneumatique pour avion, les renforts d'une couche de travail ont généralement, selon la direction circonférentielle du pneumatique, une trajectoire périodique en zigzag dont l'amplitude définit la largeur axiale de la couche de travail. L'armature de travail pilote le comportement mécanique du sommet du pneumatique. L'ensemble constitué par l'armature de travail et l'armature de protection constitue l'armature de sommet.

Selon les conceptions actuelles d'un pneumatique pour avion, l'armature de protection est souvent constituée par une seule couche de protection. La couche de protection comprend soit des renforts métalliques ayant une trajectoire ondulée selon la direction circonférentielle du pneumatique, soit des renforts textiles ayant une trajectoire ondulée selon la direction circonférentielle du pneumatique ou formant un angle avec la direction circonférentielle du pneumatique.

Dans le cas d'une couche de protection à renforts métalliques à trajectoire ondulée selon la direction circonférentielle du pneumatique, la masse de l'armature de protection est relativement élevée, compte tenu de la masse des renforts métalliques, ce qui est pénalisant pour la masse du pneumatique et donc de la charge utile embarquée par l'avion.

Que la couche de protection comprenne des renforts métalliques à trajectoire ondulée ou des renforts textiles à trajectoire ondulée ou à angle, il a été constaté que l'armature de protection peut éventuellement être insuffisante pour empêcher la migration d'objets étrangers depuis la bande de roulement jusqu'à l'armature de travail, en d'autres termes qu'elle peut être insuffisamment résistante aux dommages provoqués par des objets étrangers ou « Foreign Object Damages » (FOD). En effet, compte tenu de ses conditions d'usage sévères, caractérisées par une pression de gonflage, une charge statique et une vitesse élevées, un pneumatique pour avion est particulièrement sensible à toute agression de sa bande de roulement par un objet étranger perforant, présent de façon aléatoire sur la piste. En cas d'une telle agression de la bande de roulement, l'objet étranger perforant, après avoir traversé l'armature de protection, peut progresser vers l'armature de travail. En cas de perforation totale de l'armature de travail, il peut en résulter une perte de pression lente et un endommagement général de la structure du pneumatique. En cas de perforation partielle de l'armature de travail, la rechapabilité du pneumatique, c'est-à-dire son aptitude à avoir sa bande de roulement remplacée après usure, peut ne plus être garantie.

La présente invention a pour objectif d'augmenter la résistance de l'armature de protection d'un pneumatique pour avion à la perforation et à la coupure par des objets étrangers ayant traversé la bande de roulement du pneumatique, c'est-à-dire d'améliorer la résistance de l'armature de protection aux « Foreign Object Damages ».

Cet objectif a été atteint par un pneumatique pour avion comprenant :
- une bande de roulement, destinée à entrer en contact avec un sol,
- une armature de protection, radialement intérieure à la bande de roulement,
- l'armature de protection étant une structure cylindrique ayant pour axe de révolution l'axe de rotation du pneumatique, s'étendant axialement depuis une première extrémité axiale jusqu'à une deuxième extrémité axiale sur une largeur axiale L et s'étendant radialement depuis une première face radialement intérieure jusqu'à une deuxième face radialement extérieure sur une épaisseur radiale moyenne T,
- l'armature de protection comprenant des renforts enrobés dans un mélange élastomérique, ayant un diamètre D et ayant une trajectoire selon la direction circonférentielle du pneumatique,
- l'armature de protection étant radialement extérieure à une armature de travail,
- l'armature de travail comprenant au moins deux couches de travail radialement superposées et comprenant des renforts ayant une trajectoire en zigzag selon la direction circonférentielle du pneumatique,
- l'armature de protection ayant une épaisseur radiale moyenne T au moins égale à 2 fois le diamètre D d'un renfort,
- l'armature de protection comprenant respectivement sur sa face radialement intérieure et sur sa face radialement extérieure des parties en mélange élastomérique ayant une largeur axiale W au moins égale au diamètre D d'un renfort,
- et la trajectoire de tout renfort de l'armature de protection, selon la direction circonférentielle du pneumatique, varie radialement entre la première face radialement intérieure et la deuxième face radialement extérieure, de telle sorte que l'ensemble des trajectoires des renforts de l'armature de protection constitue un treillis tridimensionnel.

Le principe de l'invention est d'obtenir une armature de protection présentant à la fois une meilleure liaison mécanique au niveau de ses faces radialement intérieure et extérieure respectivement avec l'armature de travail et avec la bande de roulement, et une meilleure tenue au déroulage des renforts la constituant en cas d'endommagement de ladite armature de protection, grâce à un effet de treillis tridimensionnel, c'est-à-dire un effet d'enchevêtrement des renforts.

Selon l'invention, l'épaisseur radiale moyenne T de l'armature de protection est au moins égale à 2 fois le diamètre D d'un renfort pour pouvoir obtenir l'effet de treillis tridimensionnel.

Encore selon l'invention, l'armature de protection comprend respectivement sur sa face radialement intérieure et sur sa face radialement extérieure des parties en mélange élastomérique ayant une largeur axiale W au moins égale au diamètre D d'un renfort. En d'autres termes, au niveau de la face radialement intérieure respectivement extérieure, il existe des parties en mélange élastomérique exemptes de tout renfort. En pratique, en fabrication, avant l'étape de cuisson du pneumatique, ces parties en mélange élastomérique correspondent à des trous interstitiels entre les renforts qui sont remplis par un mélange élastomérique au moment de la cuisson du pneumatique. Ainsi, au niveau de la face radialement intérieure respectivement extérieure, il y a une alternance de parties comprenant des renforts et des parties exemptes de renforts, ces dernières contribuant à une liaison plus efficace avec les composants en interface avec l'armature de protection, tels que l'armature de travail et la bande de roulement. Pour être efficaces, ces parties en mélange élastomérique doivent avoir une dimension minimale, caractérisée par une largeur axiale minimale W égale à un diamètre de renfort D.

Une autre caractéristique essentielle de l'invention est que la trajectoire de tout renfort de l'armature de protection, selon la direction circonférentielle du pneumatique, varie radialement entre la première face radialement intérieure et la deuxième face radialement extérieure, de telle sorte que l'ensemble des trajectoires des renforts de l'armature de protection constitue un treillis tridimensionnel. Autrement dit, la trajectoire de tout renfort, selon la direction circonférentielle, n'est pas contenue dans une surface cylindrique ayant pour axe de révolution l'axe de rotation du pneumatique. De plus cette trajectoire est ou non variable selon la direction axiale. Il en résulte que, selon la direction circonférentielle, tout renfort est alternativement radialement extérieur et radialement intérieur à au moins un autre renfort. L'ensemble de tels renforts constitue ainsi une structure cylindrique ayant, dans son épaisseur radiale, une forme de treillis tridimensionnel ou d'enchevêtrement, de telle sorte que tout renfort sectionné accidentellement en un point par un objet étranger est bloqué par les autres renforts en contact et ne peut pas se dérouler sur toute la circonférence. Ce treillis tridimensionnel est donc un système autobloquant garantissant le non déroulement circonférentiel complet des renforts.

Avantageusement, l'armature de protection a une épaisseur radiale moyenne T au plus égale à 5 fois le diamètre D d'un renfort. Au-delà de cette épaisseur radiale moyenne T maximale, la protection est surabondante et la masse de l'armature de protection devient trop importante.

Encore avantageusement, la largeur axiale W des parties en mélange élastomérique, comprises respectivement sur la face radialement intérieure et sur la face radialement extérieure de l'armature de protection, est au plus égale à 10 fois le diamètre D d'un renfort, de préférence au plus égale à 5 fois le diamètre D d'un renfort. Au-delà de cette largeur axiale W maximale, la protection risque de devenir moins efficace vis-à-vis de la migration d'objets étrangers à travers l'armature de protection.

Dans tout plan méridien, le ratio R, entre la somme des largeurs axiales W des parties en mélange élastomérique, comprises respectivement sur la face radialement intérieure et sur la face radialement extérieure de l'armature de protection, et la largeur axiale L de l'armature de protection, est au moins égal à 0.08, de préférence au moins égal à 0.10. Ce ratio caractérise le pourcentage de parties exemptes de renforts par rapport à la largeur axiale L de l'armature de protection. Une valeur minimale de ce ratio est nécessaire à la garantie d'une liaison mécanique suffisante de l'armature de protection, d'une part avec l'armature de travail, d'autre part avec la bande de roulement.

Dans tout plan méridien, le ratio R, entre la somme des largeurs axiales W des parties en mélange élastomérique, comprises respectivement sur la face radialement intérieure et sur la face radialement extérieure de l'armature de protection, et la largeur axiale L de l'armature de protection, est au plus égal à 0.20, de préférence au plus égal à 0.15. Une valeur maximale de ce ratio est nécessaire à la garantie d'une liaison mécanique pas trop forte de l'armature de protection, d'une part avec l'armature de travail, d'autre part avec la bande de roulement.

Selon un mode de réalisation préféré, les renforts de l'armature de protection sont regroupés en bandelettes, comprenant au moins deux renforts consécutifs. L'utilisation de bandelettes de renforts, comprenant, par exemple et de façon non exhaustive, au moins quatre renforts est fréquente dans le domaine des pneumatiques d'avion pour obtenir une productivité de fabrication satisfaisante.

Selon une variante préférée du mode de réalisation préféré, les renforts de l'armature de protection sont constitués d'au moins un matériau textile. En effet un matériau textile garantit un bon compromis entre la masse et la résistance à rupture des renforts. L'utilisation de renforts textile pour l'armature de protection permet une contribution significative à la minimisation de la masse du pneumatique, et donc au gain en charge utile de l'avion.

Les renforts de l'armature de protection sont le plus souvent constitués d'un polyamide aliphatique ou d'un polyamide aromatique ou d'une combinaison d'un polyamide aliphatique et d'un polyamide aromatique. Les renforts en polyamide aromatique, tel que l'aramide, présentent un compromis entre la masse et la résistance à rupture meilleur que celui des renforts en polyamide aliphatique, tel que le nylon. Les renforts constitués d'une combinaison d'un polyamide aliphatique et d'un polyamide aromatique, appelés également des renforts hybrides, présentent à la fois les avantages d'un polyamide aliphatique et ceux d'un polyamide aromatique, à savoir une résistance à rupture élevée, une déformabilité en traction élevée et une masse faible.

Les caractéristiques et autres avantages de l'invention seront mieux compris à l'aide des figures 1 à 3 suivantes, non représentées à l'échelle :
- Figure 1 : demi-vue en coupe du sommet d'un pneumatique pour avion de l'état de la technique, dans un plan radial (YZ) passant par l'axe de rotation (YY') du pneumatique.
- Figure 2 : coupe méridienne de l'armature de protection d'un pneumatique pour avion selon l'invention, dans un plan radial (YZ) passant par l'axe de rotation (YY') du pneumatique.
- Figure 3 : vue de dessus de l'armature de protection d'un pneumatique pour avion selon l'invention.

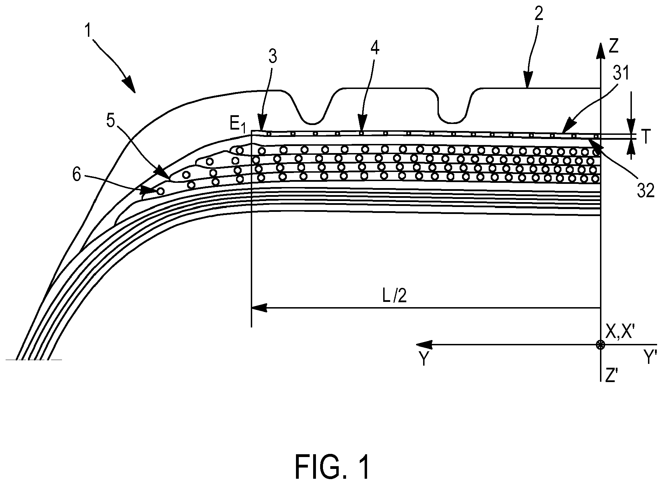

La figure 1 représente, dans un plan radial YZ passant par l'axe de rotation YY' du pneumatique, une demi-vue en coupe du sommet d'un pneumatique 1 pour avion de l'état de la technique, comprenant une bande de roulement 2, destinée à entrer en contact avec un sol et une armature de protection 3, radialement intérieure à la bande de roulement 2. L'armature de protection 3 est une structure cylindrique ayant pour axe de révolution l'axe de rotation YY' du pneumatique, s'étendant axialement depuis une première extrémité axiale E1 jusqu'à une deuxième extrémité axiale E2, symétrique par rapport au plan équatorial XZ (non représentée) sur une largeur axiale L et s'étendant radialement depuis une première face radialement intérieure 31 jusqu'à une deuxième face radialement extérieure 32 sur une épaisseur radiale moyenne T. L'armature de protection 3 comprend des renforts 4 enrobés dans un mélange élastomérique, ayant un diamètre D et ayant une trajectoire selon la direction circonférentielle XX' du pneumatique. L'armature de protection 3 est radialement extérieure à une armature de travail 5 qui comprend, dans le cas présent, quatre couches de travail radialement superposées et constituées par des renforts 6 ayant une trajectoire en zigzag selon la direction circonférentielle XX' du pneumatique.

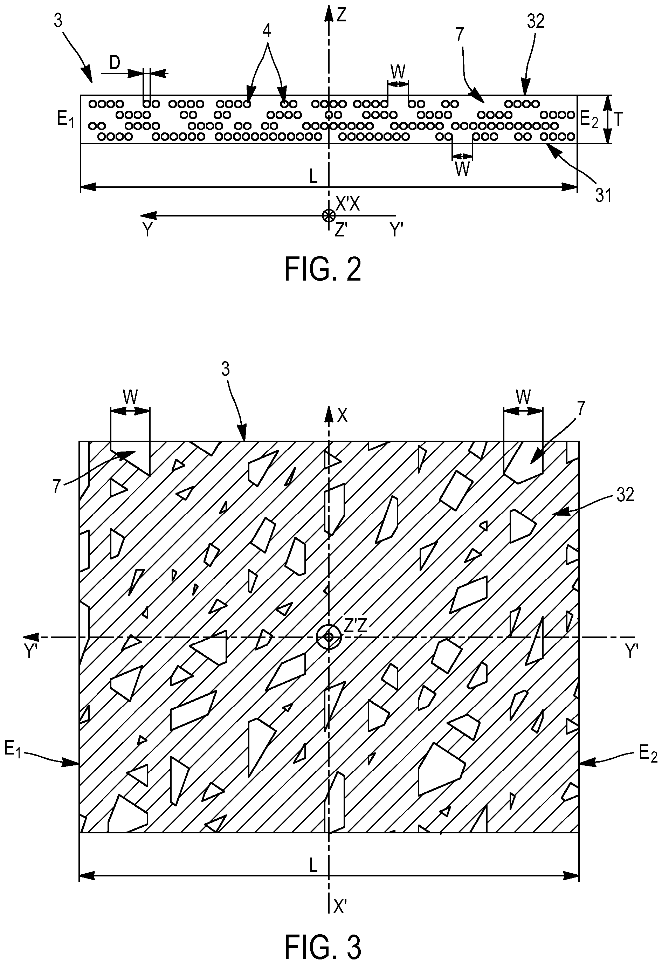

La figure 2 représente une coupe méridienne de l'armature de protection d'un pneumatique pour avion selon l'invention, dans un plan radial YZ passant par l'axe de rotation YY' du pneumatique. L'armature de protection 3 a une épaisseur radiale moyenne T au moins égale à 2 fois le diamètre D d'un renfort 4, dans le cas présent, égale à environ 5 fois le diamètre D d'un renfort 4. L'armature de protection 3 comprend respectivement sur sa face radialement intérieure 31 et sur sa face radialement extérieure 32 des parties en mélange élastomérique 7 ayant une largeur axiale W au moins égale au diamètre D d'un renfort 4. Cette coupe méridienne montre en outre que l'ensemble des trajectoires des renforts 4 de l'armature de protection 3 constitue un treillis tridimensionnel, résultant du fait que la trajectoire de tout renfort 4 de l'armature de protection 3, selon la direction circonférentielle XX' du pneumatique, varie radialement entre la première face radialement intérieure 31 et la deuxième face radialement extérieure 32.

La figure 3 représente une vue de dessus de l'armature de protection d'un pneumatique pour avion selon l'invention. Plus précisément, la figure 3 représente, de façon schématique, la deuxième face radialement extérieure 32 de l'armature de protection 3 s'étendant axialement depuis une première extrémité axiale E1 jusqu'à une deuxième extrémité axiale E2 sur une largeur axiale L. De façon générale, la face radialement extérieure 32 comprend des parties en mélange élastomérique 7 pouvant avoir une forme quelconque et ayant une largeur axiale W pouvant varier, mais au moins égale au diamètre D d'un renfort 4. Ces parties en mélange élastomérique 7 sont entourées par des parties renforcées, c'est-à-dire comprenant des renforts, qui correspondent aux zones hachurées de la figure 3, et constituent des zones de liaison mécanique préférentielles entre l'armature de protection 3 et la bande de roulement 2.

Les inventeurs ont réalisé l'invention pour un pneumatique pour avion de dimension 46X17 R 20 dont l'armature de protection est un treillis tridimensionnel de largeur axiale L égale à 200 mm et d'épaisseur radiale moyenne T égale à 4 mm. Les renforts textiles constitutifs de l'armature de protection sont en nylon, et ont un diamètre D égale 1 mm. La largeur axiale W des parties en mélange élastomérique est comprise entre 2 mm et 7 mm.

## Revendications

1. Pneumatique (1) pour avion comprenant :
- une bande de roulement (2), destinée à entrer en contact avec un sol,
- une armature de protection (3), radialement intérieure à la bande de roulement (2),
- l'armature de protection (3) étant une structure cylindrique ayant pour axe de révolution l'axe de rotation (YY') du pneumatique, s'étendant axialement depuis une première extrémité axiale (E1) jusqu'à une deuxième extrémité axiale (E2) sur une largeur axiale L et s'étendant radialement depuis une première face radialement intérieure (31) jusqu'à une deuxième face radialement extérieure (32) sur une épaisseur radiale moyenne T,
- l'armature de protection (3) comprenant des renforts (4) enrobés dans un mélange élastomérique, ayant un diamètre D et ayant une trajectoire selon la direction circonférentielle (XX') du pneumatique,
- l'armature de protection (3) étant radialement extérieure à une armature de travail (5),
- l'armature de travail (5) comprenant au moins deux couches de travail radialement superposées et constituées par des renforts (6) ayant une trajectoire en zigzag selon la direction circonférentielle (XX') du pneumatique,
**caractérisé en ce que** l'armature de protection (3) a une épaisseur radiale moyenne T au moins égale à 2 fois le diamètre D d'un renfort (4), **en ce que** l'armature de protection (3) comprend respectivement sur sa face radialement intérieure (31) et sur sa face radialement extérieure (32) des parties en mélange élastomérique (7) ayant une largeur axiale W au moins égale au diamètre D d'un renfort (4) **et en ce que** la trajectoire de tout renfort (4) de l'armature de protection (3), selon la direction circonférentielle (XX') du pneumatique, varie radialement entre la première face radialement intérieure (31) et la deuxième face radialement extérieure (32), de telle sorte que l'ensemble des trajectoires des renforts (4) de l'armature de protection (3) constitue un treillis tridimensionnel.

2. Pneumatique (1) pour avion selon la revendication 1, **dans lequel** l'armature de protection (3) a une épaisseur radiale moyenne T au plus égale à 5 fois le diamètre D d'un renfort (4).

3. Pneumatique (1) pour avion selon l'une des revendications 1 ou 2, **dans lequel** la largeur axiale W des parties en mélange élastomérique (7), comprises respectivement sur la face radialement intérieure (31) et sur la face radialement extérieure (32) de l'armature de protection (3), est au plus égale à 10 fois le diamètre D d'un renfort (4), de préférence au plus égale à 5 fois le diamètre D d'un renfort (4).

4. Pneumatique (1) pour avion selon l'une quelconque des revendications 1 à 3, **dans lequel,** dans tout plan méridien (YZ), le ratio R, entre la somme des largeurs axiales W des parties en mélange élastomérique (7), compris respectivement sur la face radialement intérieure (31) et sur la face radialement extérieure (32) de l'armature de protection (3), et la largeur axiale L de l'armature de protection (3), est au moins égal à 0.08, de préférence au moins égal à 0.10.

5. Pneumatique (1) pour avion selon l'une quelconque des revendications 1 à 4, **dans lequel,** dans tout plan méridien (YZ), le ratio R, entre la somme des largeurs axiales W des parties en mélange élastomérique (7), compris respectivement sur la face radialement intérieure (31) et sur la face radialement extérieure (32) de l'armature de protection (3), et la largeur axiale L de l'armature de protection (3),est au plus égal à 0.20, de préférence au plus égal à 0.15.

6. Pneumatique (1) pour avion selon l'une quelconque des revendications 1 à 5, **dans lequel** les renforts (4) de l'armature de protection (3) sont regroupés en bandelettes (8), comprenant au moins deux renforts (4) consécutifs.

7. Pneumatique (1) pour avion selon l'une quelconque des revendications 1 à 6, **dans lequel** les renforts (4) de l'armature de protection (3) sont constitués d'au moins un matériau textile.

8. Pneumatique (1) pour avion selon l'une quelconque des revendications 1 à 7, **dans lequel** les renforts (4) de l'armature de protection (3) sont constitués d'un polyamide aliphatique ou d'un polyamide aromatique ou d'une combinaison d'un polyamide aliphatique et d'un polyamide aromatique.

## Patentansprüche

1. Flugzeugreifen (1), der enthält:
- einen Laufstreifen (2), der dazu bestimmt ist, mit einem Boden in Kontakt zu kommen,
- eine Schutzbewehrung (3) radial innen bezüglich des Laufstreifens (2),
- wobei die Schutzbewehrung (3) eine zylindrische Struktur ist, die als Drehachse die Rotationsachse (YY') des Luftreifens hat, sich axial von einem ersten axialen Ende (E1) bis zu einem zweiten axialen Ende (E2) über eine axiale Breite L erstreckt und sich radial von einer ersten radial inneren Seite (31) bis zu einer zweiten radial äußeren Seite (32) über eine mittlere radiale Dicke T erstreckt,
- wobei die Schutzbewehrung (3) mit einer Elastomermischung umhüllte Verstärkungen (4) enthält, die einen Durchmesser D und einen Verlauf gemäß der Umfangsrichtung (XX') des Luftreifens haben,
- wobei die Schutzbewehrung (3) bezüglich einer Arbeitsbewehrung (5) radial außen liegt,
- wobei die Arbeitsbewehrung (5) mindestens zwei Arbeitslagen enthält, die radial übereinander liegen und aus Verstärkungen (6) bestehen, die einen zickzackförmigen Verlauf gemäß der Umfangsrichtung (XX') des Luftreifens haben,
**dadurch gekennzeichnet, dass** die Schutzbewehrung (3) eine mittlere radiale Dicke T mindestens gleich dem 2-Fachen des Durchmessers D einer Verstärkung (4) hat, dass die Schutzbewehrung (3) auf ihrer radial inneren Seite (31) bzw. auf ihrer radial äußeren Seite (32) Bereiche aus Elastomermischung (7) enthält, die eine axiale Breite W mindestens gleich dem Durchmesser D einer Verstärkung (4) haben, und dass der Verlauf jeder Verstärkung (4) der Schutzbewehrung (3) gemäß der Umfangsrichtung (XX') des Luftreifens radial zwischen der ersten radial inneren Seite (31) und der zweiten radial äußeren Seite (32) variiert, so dass die Gesamtheit der Verläufe der Verstärkungen (4) der Schutzbewehrung (3) ein dreidimensionales Gitter bildet.

2. Flugzeugreifen (1) nach Anspruch 1, wobei die Schutzbewehrung (3) eine mittlere radiale Dicke T höchstens gleich dem 5-Fachen des Durchmessers D einer Verstärkung (4) hat.

3. Flugzeugreifen (1) nach einem der Ansprüche 1 oder 2, wobei die axiale Breite W der Bereiche aus Elastomermischung (7), die auf der radial inneren Seite (31) bzw. auf der radial äußeren Seite (32) der Schutzbewehrung (3) enthalten sind, höchstens gleich dem 10-Fachen des Durchmessers D einer Verstärkung (4), vorzugsweise höchstens gleich dem 5-Fachen des Durchmessers D einer Verstärkung (4) ist.

4. Flugzeugreifen (1) nach einem der Ansprüche 1 bis 3, wobei in jeder Meridianebene (YZ) das Verhältnis R zwischen der Summe der axialen Breiten W der Bereiche aus Elastomermischung (7), die auf der radial inneren Seite (31) bzw. auf der radial äußeren Seite (32) der Schutzbewehrung (3) enthalten sind, und der axialen Breite L der Schutzbewehrung (3) mindestens gleich 0,08, vorzugsweise mindestens gleich 0,10 ist.

5. Flugzeugreifen (1) nach einem der Ansprüche 1 bis 4, wobei in jeder Meridianebene (YZ) das Verhältnis R zwischen der Summe der axialen Breiten W der Bereiche aus Elastomermischung (7), die auf der radial inneren Seite (31) bzw. auf der radial äußeren Seite (32) der Schutzbewehrung (3) enthalten sind, und der axialen Breite L der Schutzbewehrung (3) höchstens gleich 0,20, vorzugsweise höchstens gleich 0,15 ist.

6. Flugzeugreifen (1) nach einem der Ansprüche 1 bis 5, wobei die Verstärkungen (4) der Schutzbewehrung (3) in Bändchen (8) zusammengefasst sind, die mindestens zwei aufeinanderfolgende Verstärkungen (4) enthalten.

7. Flugzeugreifen (1) nach einem der Ansprüche 1 bis 6, wobei die Verstärkungen (4) der Schutzbewehrung (3) aus mindestens einem Textilmaterial bestehen.

8. Flugzeugreifen (1) nach einem der Ansprüche 1 bis 7, wobei die Verstärkungen (4) der Schutzbewehrung (3) aus einem aliphatischen Polyamid oder einem aromatischen Polyamid oder aus einer Kombination aus einem aliphatischen Polyamid und einem aromatischen Polyamid bestehen.

## Claims

1. Aircraft tyre (1) comprising:
- a tread (2), intended to come into contact with a ground,
- a protective reinforcement (3), radially on the inside of the tread (2),
- the protective reinforcement (3) having a cylindrical structure having as its axis of revolution the axis of rotation (YY') of the tyre, extending axially from a first axial end (E1) as far as a second axial end (E2) over an axial width L and extending radially from a radially interior first face (31) as far as a radially exterior second face (32) over a mean radial thickness T,
- the protective reinforcement (3) comprising reinforcers (4) coated in an elastomer compound, having a diameter D and having a path in the circumferential direction (XX') of the tyre,
- the protective reinforcement (3) being radially on the outside of a working reinforcement (5),
- the working reinforcement (5) comprising at least two radially superposed working layers made up of reinforcers (6) having a zigzag path in the circumferential direction (XX') of the tyre,
**characterized in that** the protective reinforcement (3) has a mean radial thickness T at least equal to two times the diameter D of a reinforcer (4), **in that** the protective reinforcement (3) comprises respectively on its radially interior face (31) and on its radially exterior face (32) parts (7) made of elastomeric compound having an axial width W at least equal to the diameter D of a reinforcer (4) and **in that** the path of any reinforcer (4) of the protective reinforcement (3), in the circumferential direction (XX') of the tyre, varies radially between the radially interior first face (31) and the radially exterior second face (32), in such a way that the set of paths of the reinforcers (4) of the protective reinforcement (3) constitutes a three-dimensional lattice.

2. Aircraft tyre (1) according to Claim 1, **in which** the protective reinforcement (3) has a mean radial thickness T at most equal to five times the diameter D of a reinforcer (4).

3. Aircraft tyre (1) according to one of Claims 1 and 2, **in which** the axial width W of the parts made of elastomeric compound (7), comprised respectively on the radially interior face (31) and on the radially exterior face (32) of the protective reinforcement (3), is at most equal to ten times the diameter D of a reinforcer (4), preferably at most equal to five times the diameter D of a reinforcer (4).

4. Aircraft tyre (1) according to any one of Claims 1 to 3, **in which,** in any meridian plane (YZ), the ratio R, between the sum of the axial widths W of the parts made of elastomeric compound (7), comprised respectively on the radially interior face (31) and on the radially exterior face (32) of the protective reinforcement (3), and the axial width L of the protective reinforcement (3), is at least equal to 0.08, preferably at least equal to 0.10.

5. Aircraft tyre (1) according to any one of Claims 1 to 4, **in which,** in any meridian plane (YZ), the ratio R, between the sum of the axial widths W of the parts made of elastomeric compound (7), comprised respectively on the radially interior face (31) and on the radially exterior face (32) of the protective reinforcement (3), and the axial width L of the protective reinforcement (3), is at most equal to 0.20, preferably at most equal to 0.15.

6. Aircraft tyre (1) according to any one of Claims 1 to 5, **in which** the reinforcers (4) of the protective reinforcement (3) are grouped into strips (8), comprising at least two consecutive reinforcers (4).

7. Aircraft tyre (1) according to any one of Claims 1 to 6, **in which** the reinforcers (4) of the protective reinforcement (3) are made of at least one textile material.

8. Aircraft tyre (1) according to any one of Claims 1 to 7, **in which** the reinforcers (4) of the protective reinforcement (3) are made of an aliphatic polyamide or of an aromatic polyamide or of a combination of an aliphatic polyamide and of an aromatic polyamide.
